(19) Europäisches Patentamt
European Patent Office
Office européen des brevets

(11) Veröffentlichungsnummer: **0 006 578**
A2

(12) **EUROPÄISCHE PATENTANMELDUNG**

(21) Anmeldenummer: 79102049.8

(22) Anmeldetag: 21.06.79

(51) Int. Cl.³: **C 08 J 7/10, C 08 J 9/26,**
**C 08 G 63/64, C 08 G 63/70**

(30) Priorität: 04.07.78 DE 2829259

(43) Veröffentlichungstag der Anmeldung: 09.01.80
Patentblatt 80/1

(84) Benannte Vertragsstaaten: DE FR GB IT NL

(71) Anmelder: BAYER Aktiengesellschaft, Zentralbereich Patente, Marken und Lizenzen Bayerwerk, D-5090 Leverkusen 1 (DE)

(72) Erfinder: Adelmann, Siegfried, Dr., Bodelschwinghstrasse 18, D-4150 Krefeld (DE)
Erfinder: Margotte, Dieter, Dr., Wedelstrasse 48, D-4150 Krefeld (DE)
Erfinder: Bottenbruch, Ludwig, Dr., Wöhlerstrasse 5, D-4150 Krefeld (DE)

(54) Verfahren zur Herstellung von Formkörpern aus mittels energiereichen Strahlen vernetzten Polycarbonaten, die erhaltenen Formkörper und deren Verwendung als Membrane.

(57) Verfahren zur Herstellung von Formkörpern aus vernetzten Polycarbonaten, dadurch gekennzeichnet, daß man durch UV- und/oder andere energiereiche Strahlung vernetzbare thermoplastische Polycarbonate gegebenenfalls nach Zusatz von Photoinitiatoren und gegebenenfalls Photoreduktionsmitteln nach der Formgebung an der Oberfläche mittels UV- und/oder andere energiereiche Strahlung vernetzt und anschließend die nicht vernetzten Anteile durch geeignete Lösungsmittel herauslöst.

ACTORUM AG

BAYER AKTIENGESELLSCHAFT     5090 Leverkusen, Bayerwerk
Zentralbereich
Patente, Marken und Lizenzen     PS/TH

Verfahren zur Herstellung von Formkörpern aus mittels
UV- und/oder anderen energiereichen Strahlen vernetzten
Polycarbonaten

Gegenstand der vorliegenden Erfindung ist ein Verfahren
zur Herstellung von Formkörpern aus vernetzten Polycarbonaten, dadurch gekennzeichnet, daß man durch UV-
und/oder andere energiereiche Strahlung vernetzbare
Polycarbonate, gegebenenfalls nach Zusatz von Photoinitiatoren und gegebenenfalls Photoreduktionsmitteln
nach der Formgebung an der Oberfläche vernetzt und
anschließend die nicht vernetzten Anteile durch geeignete Lösungsmittel herauslöst. Man erhält auf diese
Weise Filme bzw. Hohlkörper aus vernetzten Polycarbonaten,
die durch geeignete Behandlung vom Lösungsmittel isoliert
werden oder im Gel-Zustand z.B. als Membrane verwandt
werden.

Le A 18 863 - Europa

Gegenstand der vorliegenden Erfindung sind außerdem
Formkörper aus mittels UV- und/oder anderen energiereichen Strahlen vernetzten Polycarbonaten, erhältlich
nach dem vorstehend genannten Verfahren.

Polycarbonate, die sich gemäß vorliegender Erfindung
mittels UV- und/oder anderer energiereicher Strahlen
vernetzen lassen, sind bekannt /siehe beispielsweise
DOS 20 63 050 (Le A 13 359), DOS 26 15 038 (Le A 16 842),
DT-PS 12 21 012 (Ue 1818) und DOS 15 95 703 (Le A 10 389)7
bzw. in den nachfolgenden deutschen Patentanmeldungen
beschrieben: P 27 46 139.8 (Le A 18 392), P 27 46 140.1
(Le A 18 393) und P 27 46 141.2 (Le A 18 394).

Demzufolge müssen durch UV- oder andere energiereiche
Strahlen vernetzbare Polycarbonate entweder Alkenyl-
Gruppen oder labile C-H-Bindungen oder Benzophenon-
Strukturen einkondensiert enthalten, um sie gegebenenfalls nach Zusatz von Photoinitiatoren und gegebenenfalls nach Zusatz von Photoreduktionsmitteln an ihrer
Oberfläche mehr oder weniger intensiv zu vernetzen.

Ausführliche zusätzliche Erläuterungen können den nachfolgend genannten deutschen Patentanmeldungen P 27 46 139.8
(Le A 18 392), P 27 46 140.1 (Le A 18 393) und P 27 46 141.2
(Le A 18 394), sowie den am gleichen Tage eingereichten
Patentanmeldungen P 28 29 258.2 (Le A 18 845), P 28 29 257.1
(Le A 18 846) und P 28 29 256.0 (Le A 18 847) entnommen
werden.

Le A 18 863

Derartige durch UV- oder andere energiereiche Strahlen vernetzbare Polycarbonate werden durch Umsetzung von aromatischen Diphenolen und Phosgen nach bekannten Verfahren beispielsweise dem Zweiphasengrenzflächenverfahren aufgebaut (siehe beispielsweise US 30 28 365 und die Monographie "H.Schnell, Chemistry and Physics of Polycarbonates, Interscience Publishers, New York, 1964).

Derartige durch UV- oder andere energiereiche Strahlen vernetzbare Polycarbonate sollen Gewichtsmittelmolekulargewichte $\bar{M}_w$ zwischen 10.000 und 200.000, vorzugsweise zwischen 20.000 und 80.000 haben (gemessen durch Lichtstreuung in bekannter Weise).

Aufgabe der vorliegenden Erfindung war es nun, aus derartigen Polycarbonaten vernetzte beziehungsweise unlösliche Formkörper auf einfache Weise herzustellen. Dies wird erfindungsgemäß dadurch erreicht, daß man (die vorstehend beschriebenen) Polycarbonate mit UV-Strahlen oder mit energiereicheren Kathodenstrahlen nach vorheriger Formgebung vernetzt und die unvernetzten Bestandteile anschließend herauslöst.

Als Strahlungsquellen dienen handelsübliche UV-Strahler, beispielsweise Philips HTQ 4 oder 7, Hanovia-Strahler u.a. beziehungsweise handelsübliche Elektronenstrahlhärter, beispielsweise 150 kV-Elektronenbeschleuniger System ESH 150 der Polymer Physik, Tübingen oder 320 kV-Elektronenbeschleuniger, Werner und Pfleiderer, Stuttgart. Die Bestrahlung erfolgt unter konventionellen Bedingungen.

Le A 18 863

Als Lösungsmittel für das Herauslösen der unvernetzten Anteile dienen übliche Polycarbonat-Lösungsmittel, wie z.B. Methylenchlorid. Das Herauslösen der unvernetzten Anteile kann normalerweise bei Raumtemperatur (20 - 30°C) erfolgen, in besonderen Fällen im Temperaturbereich bei 40 - 80°C, beispielsweise mit Dioxan.

Die Isolierung der unlöslichen Formkörper erfolgt durch Abtrennung des Lösungsmittels. Dies kann z.B. erfolgen durch Abdampfen des Lösungsmittels oder Zugabe von üblichen Polycarbonat-Fällungsmitteln und anschließender Trocknung.

Da die Formgebung der durch UV- und andere energiereiche Strahlen vernetzbaren Polycarbonate mittels Extrusion und Spritzgußverarbeitung unbegrenzt ist und die Bestrahlung der Oberfläche der Strukturgebilde in gewünschter Weise gezielt und variabel erfolgen kann, sind somit Strukturkörper beliebiger Art herstellbar.

Anwendung finden die erfindungsgemäß hergestellten vernetzten Formkörper beispielsweise als Folien für Membranen oder als Kapillaren und Hohlkörper.

Der Erfindungsgegenstand soll am folgenden Beispiel näher erläutert werden:

Le A 18 863

## Beispiel

Aus 3,192 kg 2,2-Bis-(4-hydroxyphenyl)-propan (Bisphenol A) (14 Mol), 2,53 kg 45 %iger wäßriger Natronlauge und 15 l destilliertem Wasser wird eine Lösung hergestellt. Nach Zugabe von 34 kg Methylenchlorid werden unter Rühren 52,5 g Methacrylsäurechlorid (ca. 0.5 Mol), in 1 kg Methylenchlorid gelöst, bei Raumtemperatur zugefügt. Bei 20 - 25°C werden 2,64 kg Phosgen eingeleitet. Durch Zugabe weiterer 26,3 kg 6,5 %iger Natronlauge während der Phosgenierung wird der pH-Wert bei 13 bis 14 gehalten. Anschließend werden 15 ml Triäthylamin zugesetzt und 30 min. nachgerührt. Dann wird die obere wäßrige Phase abgetrennt, die organische Phase angesäuert und elektrolytfrei gewaschen. Anschließend wird aus einem Teil der organischen Phase das Polycarbonat als Film isoliert.

Der so gewonnene Polycarbonat-Film wird auf einer Elektronenstrahlhärter-Anlage von 320 kV-Beschleunigerspannung bei einer Bandgeschwindigkeit von 10 m/min. vernetzt. Die löslichen Anteile werden anschließend durch Methylenchlorid herausgelöst. Es bleibt ein transparenter, aufgequollener zusammenhängender Gelfilm zurück.

Die Isolierung erfolgt durch Abdampfen des Lösungsmittels und anschließender Trocknung der Folie.

Aus dem Rest der organischen Phase wird das Methylenchlorid über eine ZSK-Maschine bei 300$^\circ$C abgedampft
und das Polycarbonat granuliert. Die rel. Lösungsviskosität beträgt 1,30 gemessen in Methylenchlorid bei
25$^\circ$C und einer Konzentration von 5 g/l).

Das Polycarbonat-Granulat wird mit 2,5 Gew.-% Benzophenon
als Photoinitiator und 3 Gew.-% Dibenzyläther als Photoreduktionsmittel für das Benzophenon über einen Zweiwellenextruder ausgerüstet und als Strang bei 260$^\circ$C Massetemperatur abgesponnen.

Der Strang wird unter einem Philips HTQ 7-Brenner 30 sec.
mit UV-Strahlen belichtet. Nach dem Lösen der unvernetzten Anteile in Methylenchlorid erhält man einen
schlauchförmigen transparenten Hohlkörper aus vernetztem,
aufgequollenem Polycarbonat.

Durch Zugabe von Fällungsmittel wird das Lösungsmittel
aus dem gequollenen Polycarbonat herausgezogen, so daß
ein kompakter Formkörper isolierbar ist.

Die derart hergestellten vernetzten Polycarbonat-Filme
bzw. -Hohlkörper können beispielsweise als Membrane
für Dialyse-Vorgänge eingesetzt werden.

## Patentansprüche

1. Verfahren zur Herstellung von Formkörpern aus vernetzten Polycarbonaten, dadurch gekennzeichnet, daß man durch UV- und/oder andere energiereiche Strahlung vernetzbare thermoplastische Polycarbonate gegebenenfalls nach Zusatz von Photoinitiatoren und gegebenenfalls Photoreduktionsmitteln nach der Formgebung an der Oberfläche mittels UV- und/oder andere energiereiche Strahlung vernetzt und anschließend die nicht vernetzten Anteile durch geeignete Lösungsmittel herauslöst.

2. Formkörper aus UV- und/oder andere energiereiche Strahlung vernetzten Polycarbonaten, erhältlich gemäß Verfahren des Anspruchs 1.

3. Verwendung der Formkörper gemäß Anspruch 2 als Membrane.

**Le A 18 863**